Europäisches Patentamt

European Patent Office

Office européen des brevets

(19)

(11) **EP 1 005 946 B1**

(12) **FASCICULE DE BREVET EUROPEEN**

(45) Date de publication et mention
de la délivrance du brevet:
**12.02.2003 Bulletin 2003/07**

(51) Int Cl.⁷: **B23K 35/30**, C22C 19/05

(21) Numéro de dépôt: **99402925.4**

(22) Date de dépôt: **25.11.1999**

(54) **Electrode de soudage en alliage base nickel et alliage correspondant**

Schweisselektrode aus einer Nickelbasislegierung und diese Legierung

Nickel base alloy welding electrode and the alloy

(84) Etats contractants désignés:
**AT BE CH CY DE DK ES FI FR GB GR IE IT LI LU MC NL PT SE**

(30) Priorité: **01.12.1998 FR 9815104**

(43) Date de publication de la demande:
**07.06.2000 Bulletin 2000/23**

(73) Titulaires:
• **UGINE-SAVOIE IMPHY**
**73400 Ugine (FR)**
• **Sprint Métal - Société de Production**
**Internationale de Tréfiles**
**92800 Puteaux (FR)**

(72) Inventeurs:
• **Cozar, Ricardo**
**58160 La Fermete (FR)**
• **Bruyere, Albert**
**01000 St Denis lès Bourg (FR)**
• **Bonnefois, Bernard**
**71670 Le Breuil (FR)**

(74) Mandataire: **Ventavoli, Roger**
**USINOR,**
**Direction Propriété Industrielle,**
**Immeuble "La Pacific",**
**La Défense,**
**11/13 Cours Valmy,**
**TSA 10001**
**92070 La Défense (FR)**

(56) Documents cités:
**EP-A- 0 247 577**          **DE-A- 19 536 978**
**US-A- 3 181 970**          **US-A- 3 650 734**

• **PATENT ABSTRACTS OF JAPAN vol. 013, no. 365 (M-859), 15 août 1989 (1989-08-15) & JP 01 122694 A (NIPPON UERUDEINGUROTSUTO KK;OTHERS: 01), 15 mai 1989 (1989-05-15)**
• **KOSEKI T ET AL: "AN INVESTIGATION OF WELD SOLIDIFICATION IN CR-NI-FE-MO ALLOYS" WELDING INTERNATIONAL, vol. 6, no. 7, 1 janvier 1992 (1992-01-01), pages 516-522, XP000278971 ISSN: 0950-7116**
• **STEPHENSON N: "VERSATILITY OF HIGHLY ALLOYED NI-CR-MO WELDING CONSUMABLES - PART I" WELDING AND METAL FABRICATION, vol. 58, no. 7, 1 août 1990 (1990-08-01), page 376, 378, 380, 38 XP000164478 ISSN: 0043-2245**

## Description

L'invention concerne un alliage base nickel particulièrement adapté à la fabrication d'une électrode de soudage constituée d'un fil en alliage base nickel pour le soudage de produits, et notamment de tôles, en acier inoxydable superausténitique ou en acier inoxydable superduplex. Cet alliage peut également être utilisé pour réaliser par soudage des revêtements résistant à la corrosion sur des produits en acier faiblement allié.

De nombreux équipements devant résister à la corrosion sont fabriqués par assemblage par soudage de produits tels que des tôles ou des tubes en acier inoxydable superausténitique ou superduplex. Les aciers inoxydables superausténitiques et superduplex sont des aciers inoxydables contenant (en % en poids) notamment de 18% à 30% de chrome, jusqu'à 7% de molybdène, jusqu'à 0,5% d'azote ainsi que du nickel dont la teneur est ajustée pour obtenir soit une structure entièrement austénitique, soit une structure mixte partiellement austénitique et partiellement ferritique. Ces aciers sont caractérisés par un coefficient PREN = Cr + 3,3 x Mo + 16 x N supérieur à 35. Ce coefficient est un indicateur de la résistance à la corrosion localisée, résistance qui est d'autant meilleure que le coefficient est élevé.

Pour que les équipements ainsi fabriqués aient une tenue en service satisfaisante, les soudures doivent avoir à la fois une résistance à la corrosion et des propriétés mécaniques telles que dureté et résilience satisfaisantes compatibles avec les propriétés des tôles soudées. De plus, les soudures doivent pouvoir être réalisées sans qu'elles présentent de défauts.

Lorsque les conditions d'utilisation exigent que les soudures résistent aussi bien à la corrosion que le métal de base, les produits sont soudés avec un métal d'apport en alliage base nickel du type 625 contenant environ 22 % de chrome, 9 % de molybdène et 3,5 % de niobium, le reste étant des impuretés résultant de l'élaboration. En particulier, cet alliage ne contient pas d'azote. Cette technique présente l'inconvénient de poser des problèmes de fissuration à chaud et d'hétérogénéité de composition des soudures.

Afin de remédier à ces inconvénients, il a été proposé d'utiliser un alliage base nickel sans niobium contenant 18 % à 25 % de chrome, de 6 % à 12 % de molybdène remplacé totalement ou partiellement par du tungstène (6 % ≤ Mo + W ≤ 12 %), de 0,1 % à 3 % de cuivre et de 0,1 à 0,3 % d'azote. Cet alliage présente l'avantage de conduire à des soudures qui ont une bonne résistance à la fissuration à chaud, une bonne résistance à la corrosion et une bonne ténacité. Cependant, du fait de la présence de cuivre, cet alliage est difficile à laminer à chaud, et du fait d'une forte teneur en azote qui conduit à la formation de nitrures du type $(0,5Cr, 0,32Ni, 0,18Mo)_5N$, il est difficile à tréfiler. Par ailleurs, au moins pour les aciers superausténitiques, la résistance à la corrosion des soudures est un peu plus faible qu'avec l'alliage 625 au niobium.

Afin de remédier aux inconvénients résultant de la présence de cuivre et d'une forte teneur en azote, il a été proposé d'utiliser un alliage base nickel du type 22 % de chrome, 9 % de molybdène sans niobium ni cuivre, et avec une teneur en azote inférieure à 0,1 %. Cet alliage se lamine à chaud et se tréfile bien, il conduit à des soudures qui ont une bonne résistance à la fissuration à chaud. Pour le soudage des alliages superduplex, cet alliage améliore la ténacité des soudures en limitant les ségrégations et la formation de phases intermétalliques. Cependant, pour les aciers inoxydables superaustenitiques, les soudures obtenues n'ont pas une résistance à la corrosion localisée aussi bonne que ce qui serait souhaité. De plus, pour les aciers superduplex, les soudures ont une dureté un peu insuffisante.

Le but de la présente invention est de remédier à ces inconvénients en proposant un alliage base nickel utilisable pour la fabrication de fil pour le soudage de produits en acier inoxydable superduplex ou superaustenitique, facile à laminer à chaud et à tréfiler, et conduisant à des soudures ayant une bonne résistance à la fissuration à chaud, une bonne ténacité, une dureté satisfaisante et une bonne résistance à la corrosion.

A cet effet, l'invention a pour objet une électrode de soudage constituée d'un fil ou d'un feuillard en alliage base nickel dont la composition chimique comporte, en poids

$$20 \% \leq Cr \leq 24 \%$$

$$8 \% \leq Mo \leq 12 \%$$

$$0,1 \% \leq W \leq 5 \%$$

$$Mo + W > 12 \%$$

$$Fe < 5 \%$$

**EP 1 005 946 B1**

Cu < 0,1 %

N < 0,1 %

C < 0,02 %

Si < 0,1 %

Mn < 0,4%

0,03% ≤ Al ≤ 0,4 %

0,004 % ≤ Mg ≤ 0,04 %

P < 0,02 %

S < 0,02 %

le reste étant du nickel et des impuretés résultant de l'élaboration.

De préférence, la composition chimique est telle que :

21 % ≤ Cr ≤ 23 %

9% ≤ Mo ≤ 11 %

2% ≤ W ≤ 4%

Fe < 2 %

L'invention concerne également un procédé de soudage de tôles en acier inoxydable superausténitique ou en acier inoxydable superduplex et un procédé de revêtement par soudage de produits en acier faiblement allié par apport de métal par fusion d'une électrode de soudage telle que définie ci-dessus.

L'invention concerne, enfin, l'alliage base nickel dont est constitué l'électrode de soudage et dont la composition est définie ci-dessus.

Il est à noter que cet alliage peut être utilisé également pour le soudage de produits en acier du type 9% de nickel (contenant principalement du fer et 9% de nickel) destiné aux applications cryogéniques. L'alliage peut aussi être utilisé notamment sous forme de tôles, de barres, de tubes, de pièces forgées ou constituer la couche inoxydable d'une tôle plaquée.

Lorsque l'électrode de soudage est constituée d'un fil, celui-ci peut être nu et l'électrode peut être utilisée pour le soudage selon le procédé MIG ou le procédé TIG. Le fil peut également constituer l'âme d'une électrode enrobée non synthétique. Une électrode enrobée non synthétique, connue en elle même, est constituée d'une âme métallique enrobée de matières destinées notamment à former un laitier qui n'a pas d'influence sur la teneur en éléments principaux du métal déposé

Ainsi, l'électrode selon l'invention est notamment soit un fil nu en alliage selon l'invention, soit une électrode enrobée dont l'âme est un fil en alliage selon l'invention, soit encore, un feuillard en alliage selon l'invention.

L'invention va maintenant être décrite plus en détails et illustrée par des exemples.

L'alliage utilisé comme électrode de soudage pour le soudage d'aciers inoxydables superduplex ou superausténitique est un alliage base nickel dont la composition chimique comprend, en poids :

- de 20 % à 24 %, et de préférence de 21 % à 23 %, de chrome ainsi que de 8 % à 12 %, et de préférence de 9 % à 11 %, de molybdène, pour assurer une résistance à la corrosion localisée tout en évitant la formation de phases intermétalliques lors de la solidification des cordons de soudure notamment ;
- de 0,1 % à 5 %, et de préférence de 2 % à 4 %, de tungstène pour durcir le cordon de soudure et améliorer la résistance à la corrosion sans dégrader la ténacité ; les inventeurs ont constaté de façon nouvelle que le tungstène présentait un avantage particulier car, contrairement au chrome et au molybdène qui ségrègent préférentiellement dans les espaces interdendritiques, le tungstène ségrège préférentiellement dans l'axe des dendrites ; cet effet sera explicité plus loin ;
- de 0,03 % à 0,4 % d'aluminium et de 0,004% à 0,04 % de magnésium pour assurer une bonne compacité des soudures ;
- le reste étant du nickel et des impuretés résultant de l'élaboration.

Les impuretés sont notamment :

- le fer dont la teneur doit rester inférieure à 5 % et de préférence à 2 % afin de limiter la teneur en fer du métal fondu, notamment lorsque l'alliage est destiné à réaliser par soudage un revêtement sur une pièce en acier faiblement allié, afin de conserver une bonne résistance à la corrosion ;
- le silicium dont la teneur doit rester inférieure à 0,1 % et le manganèse dont la teneur doit rester inférieure à 0, 4% pour réduire la tendance à former la phase σ ;
- le cuivre dont la teneur doit rester impérativement inférieure à 0,1 % et être la plus faible possible afin de faciliter le laminage à chaud lors de la fabrication du fil machine ;
- l'azote dont la teneur doit rester impérativement inférieure à 0,1 % afin d'éviter la formation de nitrures défavorables à la tréfilabilité ;
- le soufre et le phosphore dont les teneurs doivent rester inférieures à 0,02 % pour assurer une bonne résistance à la fissuration à chaud.

A noter que l'alliage peut contenir des traces de niobium apporté par les matières premières, c'est à dire moins de 0,1 % et de préférence, moins de 0,05 %.

L'effet particulier du molybdène est illustré par un alliage base nickel dont la composition moyenne est Cr = 22 %, Mo = 10 %, W = 3 %, N ≅ 0 %. Si avec cet alliage on réalise une soudure par le procédé TIG, le cordon de soudure obtenu est constitué d'un alliage solidifié dont la composition chimique moyenne est celle du métal d'apport. Cependant, cet alliage a une structure de solidification constituée de dendrites séparées par des espaces interdendritiques. La composition de l'alliage dans l'axe des dendrites est : Cr = 20,5 %, Mo = 7,8 %, W = 3,7 % ; dans les espaces interdendritiques, la composition est : Cr = 24 %, Mo =14,5 %, W = 2,3 %.

L'effet du chromé, du molybdène et du tungstène sur la résistance à la corrosion localisée peut être évaluée par un indice PRENW = Cr + 3,3 x (Mo + W/2) +16 N. Plus cet indice est élevé, meilleure est la résistance à la corrosion localisée. A l'aide de cet indice on peut comparer la résistance à la corrosion localisée de l'alliage ayant la composition moyenne et celle de l'axe des dendrites. On peut également comparer la résistance à la corrosion localisée dans l'axe des dendrites de deux alliages ayant la même résistance moyenne à la corrosion localisée, mais l'un contenant du tungstène et l'autre n'en contenant pas :

|  |  | Cr | Mo | W | PRENW |
|---|---|---|---|---|---|
| alliage 1 | analyse moyenne | 22 % | 10 % | 3 % | 59,95 |
|  | axe des dendrites | 20,5 % | 7,8 % | 3,7 % | 52,35 |
| alliage 2 | analyse moyenne | 22 % | 11,5 % | 0 % | 59,95 |
|  | axe des dendrites | 20,5 % | 8,97 % | 0 % | 50,10 |

Ces résultats montrent que bien qu'ayant le même PRENW moyen, l'alliage 1 contenant du tungstène a une meilleure résistance à la corrosion localisée dans l'axe des dendrites que l'alliage 2 ne contenant pas de tungstène. On notera par ailleurs, que, du fait des ségrégations de chrome et de molybdène, la résistance à la corrosion localisée est dans les deux cas meilleure dans les espaces interdendritiques que dans les axes des dendrites.

Pour fabriquer des électrodes de soudage, l'alliage est élaboré de façon classique, par exemple au four électrique, puis coulé sous forme de billettes, lesquelles sont laminées à chaud pour former un fil machine. Le fil machine est alors tréfilé pour obtenir un fil qui peut être utilisé comme électrode de soudage.

Du fait de sa composition, l'alliage selon l'invention se lamine à chaud plus facilement que les alliages de l'art antérieur, notamment parce que sa température de solidus est plus élevée : 1367 °C contre 1283 °C pour un alliage typique contenant environ 21,8 % de chrome, 8,6 % de molybdène, et 3,5 % de niobium. De plus, du fait de la faible teneur en azote, il se tréfile aussi facilement que les alliages de l'art antérieur qui contiennent peu d'azote, et beaucoup plus facilement que les alliages à forte teneur en azote.

Pour souder des produits en acier inoxydable superausténitique ou superduplex ou du type Fe-9%Ni, on utilise par exemple le procédé MIG ou le procédé TIG, connus en eux mêmes, et dans lesquels, l'électrode est un fil métallique. Lorsqu'on réalise un revêtement par soudage d'un produit en acier faiblement allié, l'électrode de soudage est un feuillard laminé à froid.

Les cordons ainsi obtenus ont notamment une résistance à la traction plus élevée d'environ 60 MPa par rapport aux cordons obtenus avec les électrodes selon l'art antérieur ne contenant ni niobium ni tungstène. Cette résistance à la traction plus élevée dépend des teneurs précises en molybdène et en tungstène dont l'effet sur la dureté peut être évaluée par la formule HV = 136 +5,8 (Mo + 0,6 x W).

Du fait de la dilution du métal d'apport par le métal de base, la résistance à la corrosion d'une soudure particulière dépend à la fois du métal de base (métal dont sont constitués les produits soudés) et des conditions de soudage (soudage monopasses ou multipasses, par exemple). Mais cependant, on peut comparer les résistance à la corrosion obtenue avec différents métaux d'apport, en comparant les températures critiques de piqûre Tcp des alliages (hors dilution dans la soudure) mesurées selon le test ASTM G48A.

A l'état brut de solidification, Tcp est de 95 °C pour l'alliage selon l'invention, alors qu'elle n'est que de 50 °C pour un alliage base nickel contenant 22 % de chrome, 8,7 % de molybdène, 0,04 % d'azote le reste étant du nickel et des impuretés. Pour les mêmes alliages à l'état corroyé, Tcp est respectivement supérieure à 95 °C et de l'ordre de 50 °C. De plus, les soudures ne présentent pas de fissuration à chaud.

A titre de premier exemple, on a soudé par le procédé MIG des tôles de 8 mm d'épaisseur en acier inoxydable superduplex de composition (en % en poids):

| Cr | Ni | Mo | N | C | Si | Mn | S | P | Fe | PREN |
|----|-----|-----|------|-------|------|-----|-------|-------|-----|------|
| 25,0 | 6,3 | 3,7 | 0,25 | 0,015 | 0,34 | 1,0 | 0,001 | 0,012 | bal | 41,2 |

Le soudage a été effectué avec une électrode A conforme à l'invention et trois électrodes B, C et D selon l'art antérieur. Les électrodes étaient constituées de fils de 1,2 mm de diamètre. Le gaz protecteur était un mélange de 80 % d'argon et 20 % d'azote. L'énergie de soudage était de 0,8 kJ/mm.

Les électrodes étaient en alliage base nickel de compositions chimiques (en % en poids) :

| | | Cr | Mo | W | Nb | Fe | Cu | N | C | Si | Mn | Al | Mg | P | S | PRENW |
|---|---|---|---|---|---|---|---|---|---|---|---|---|---|---|---|---|
| A | | 21,9 | 9,9 | 3,1 | 0,01 | 1,1 | <0,01 | 0,07 | 0,005 | 0,06 | 0,05 | 0,12 | 0,02 | 0,004 | 0,002 | 60,8 |
| B | | 21,9 | 8,7 | 0,03 | 3,74 | 0,7 | <0,01 | 0,02 | 0,005 | 0,08 | 0,03 | 0,14 | 0,022 | 0,006 | 0,002 | 51,0 |
| C | | 22,0 | 8,8 | 0,03 | 0,01 | 0,7 | <0,01 | 0,05 | 0,004 | 0,05 | 0,05 | 0,07 | 0,024 | 0,004 | 0,002 | 51,9 |
| D | | 21,9 | 8,5 | 0,01 | 0,03 | 5,76 | 0,6 | 0,16 | 0,011 | 0,14 | 0,12 | 0,01 | 0 | 0,006 | 0,005 | 52,5 |

Pour caractériser les soudures on a mesuré :

- la fraction volumique de précipités interdendritiques en zone fondue,
- la dureté HV5 en zone fondue,
- la résistance Rm (en MPa) en zone fondue,
- la résilience KCV (en J/cm$^2$) à - 50 °C et + 20 °C,
- La température de piqûre Tcp (en °C) concernant généralement la zone affectée sauf dans le cas de l'électrode C pour laquelle la piqûre apparaît simultanément dans la zone affectée et dans la zone fondue ; cette température est mesurée selon la norme ASTM G 48 A.

Les résultats ont été les suivants :

| | % précipités interdendritiques | HV5 en zone fondue | Rm en zone fondue | KCV (J/cm$^2$) | | Tcp (°C) |
|---|---|---|---|---|---|---|
| | | | | - 50 °C | + 20 °C | |
| A | 1 | 195 | 862 | 142 | 166 | 50 |
| B | 5 | 210 | 964 | 37 | 48 | 50 |
| C | 0,4 | 180 | 790 | 158 | 194 | 45 |
| D | 3 | 190 | 838 | 86 | 113 | 50 |

Ces résultats montrent qu'avec l'alliage selon l'invention, d'une part la fraction volumique de précipités interdendritiques est faible, ce qui est favorable à l'obtention d'une bonne ténacité, surtout à basse température, et la température critique de piqûre est satisfaisante d'autre part que la dureté HV5 et la résistance à la traction Rm bien qu'un peu plus faibles qu'avec l'alliage B (correspondant à l'alliage 625 au niobium), sont sensiblement meilleures qu'avec l'alliage C. Avec l'alliage selon l'invention, la résilience est très nettement meilleure qu'avec les alliages B ou D.

A titre de deuxième exemple, avec les mêmes fils que dans l'exemple précédent, on a soudé par le procédé MIG (fil nu) et avec des électrodes enrobées des tôles de 12 mm d'épaisseur en acier inoxydable superausténitique dont la composition chimique était :

| Cr | Ni | Mo | N | Cu | C | Si | Mn | S | P | Fe | PREN |
|---|---|---|---|---|---|---|---|---|---|---|---|
| 20,6 | 24,5 | 6,2 | 0,2 | 0,92 | 0,021 | 0,26 | 0,79 | 0,001 | 0,014 | bal | 44,3 |

L'énergie de soudage était de 1,1 kJ/mm.

Pour caractériser les soudures, on a mesuré :

- la fraction volumique de précipités interdendritiques en zone fondue,
- la résilience KCV (en J/cm$^2$) à + 20 °C,
- La température de piqûre Tcp (en °C), mesurée selon la norme ASTM G 48 A.

Les résultats ont été les suivants :

| | % précipités interdendritiques | KCV 20°C (J/cm$^2$) | | Tcp (°C) selon ASTM G 48A | |
|---|---|---|---|---|---|
| | | MIG | électrode enrobée | MIG | électrode enrobée |
| A | 0,5 | 275 | 130 | 70 | 65 |
| B | 3 | 150 | 45 | 60 | 57,5 |
| C | 0,2 | 300 | 145 | 50 | 50 |
| D | 1,5 | 220 | 95 | 60 | 55 |

Ces résultats montrent, notamment, que l'alliage selon l'invention permet d'obtenir une résistance à la corrosion, mesurée par la température Tcp, sensiblement plus élevée qu'avec les alliages selon l'art antérieur pour lesquels on observe des piqûres en zone fondue (surtout avec l'alliage C), et également, qu'il permet d'obtenir une résilience sensiblement plus élevée qu'avec l'alliage B ou l'alliage D.

Par ailleurs, l'utilisation de l'électrode A permet d'obtenir des soudures d'aciers inoxydables superduplex ou superausténitiques de bonne qualité du fait de la bonne résistance à la fissuration à chaud de cet alliage.

La fissuration à chaud, qui peut apparaître notamment dans les cordons déjà déposés lorsque ceux-ci sont affectés par le dépôt de cordons nouveaux, dans le cas du soudage de produits épais, est réduit quand l'intervalle de fusion (température de fusion - température de solidus) est réduit. Les résultats ci dessous montrent que l'alliage A conforme à l'invention a un intervalle de fusion un peu plus faible que l'alliage C (sans Nb), et, beaucoup plus faible que l'alliage B (contenant du Nb). De ce fait, la résistance à la fissuration à chaud de l'alliage A est comparable à celle de l'alliage C, et bien meilleure que celle de l'alliage B.

| Alliage | Température de solidus (°C) | Température de fusion (°C) | Intervalle de fusion (°C) |
|---------|---------------------------|---------------------------|---------------------------|
| A | 1367 | 1405 | 38 |
| B | 1283 | 1368 | 85 |
| C | 1365 | 1409 | 44 |

La résistance à la fissuration à chaud de la zone fondue a également été mesurée par l'essai Varestraint, connu en lui même, pour les alliages A et B. Cet essai qui consiste à imposer une déformation donnée à un cordon de soudure et à mesurer en suite la longueur des fissures engendrées par cette déformation (longueur maximale de fissure et longueur cumulée des fissures) a donné les résultats suivants

| Alliage | déformation imposée (%) | longueur maxi de fissure (mm) | longueur cumulée des fissures (mm) |
|---------|------------------------|-------------------------------|-----------------------------------|
| A | 1 | 0 | 0 |
| | 2,5 | 0,2 | 0,5 |
| B | 1 | 0,4 | 0,8 |
| | 2,5 | 0,9 | 3,6 |

Ces résultats montrent que la sensibilité à la fissuration à chaud de l'alliage A conforme à l'invention est beaucoup plus faible que celle de l'alliage B.

**Revendications**

**1.** Electrode de soudage comportant un fil ou un feuillard en alliage base nickel dont la composition chimique comprend, en poids :

$$20\% \leq Cr \leq 24\%$$

$$8\% \leq Mo \leq 12\%$$

$$0,1\% \leq W \leq 5\%$$

$$Mo + W > 12\%$$

$$Fe < 5\%$$

$$Cu < 0,1 \text{ \%}$$

$$N < 0,1 \text{ \%}$$

$$C < 0,02 \text{ \%}$$

$$Si < 0,1 \text{ \%}$$

$$Mn < 0,4 \text{ \%}$$

$$0,03 \text{ \%} \leq Al \leq 0,4 \text{ \%}$$

$$0,004 \text{ \%} \leq Mg \leq 0,04 \text{ \%}$$

$$P < 0,02 \text{ \%}$$

$$S < 0,02 \text{ \%}$$

le reste étant du nickel et des impuretés résultant de l'élaboration.

2. Electrode de soudage selon la revendication 1 **caractérisée en ce que** sa composition chimique est telle que :

$$21 \text{ \%} \leq Cr \leq 23 \text{ \%}$$

$$9\% \leq Mo \leq 11\%$$

$$2\% \leq W \leq 4\%$$

$$Fe < 2 \text{ \%}$$

3. Electrode selon la revendication 1 ou la revendication 2 **caractérisée en ce qu'**elle est constituée d'un fil nu.

4. Electrode selon la revendication 1 ou la revendication 2 **caractérisée en ce qu'**elle est du type enrobée non synthétique.

5. Procédé de soudage de tôles en acier inoxydable superausténitique ou en acier inoxydable superduplex ou en acier à 9 % de nickel pour applications cryogéniques, par apport de métal par fusion d'une électrode de soudage, **caractérisé en ce que** l'électrode de soudage est conforme à l'une quelconque des revendications 1 à 4.

6. Alliage base nickel comprenant, en poids :

$$20 \text{ \%} \leq Cr \leq 24 \text{ \%}$$

$$8\% \leq Mo \leq 12\%$$

$$0,1\ \% \leq W \leq 5\ \%$$

$$Mo + W > 12\ \%$$

$$Fe < 5\ \%$$

$$Cu < 0,1\ \%$$

$$N < 0,1\ \%$$

$$C < 0,02\ \%$$

$$Si < 0,1\ \%$$

$$Mn < 0,4\ \%$$

$$0,03\ \% \leq Al \leq 0,4\ \%$$

$$0,004\ \% \leq Mg \leq 0,04\ \%$$

$$P < 0,02\ \%$$

$$S < 0,02\ \%$$

le reste étant du nickel et des impuretés résultant de l'élaboration.

7. Alliage base nickel selon la revendication 6 **caractérisé en ce que** la composition chimique de l'alliage est telle que :

$$21\ \% \leq Cr \leq 23\ \%$$

$$9\% \leq Mo \leq 11\ \%$$

$$2\% \leq W \leq 4\ \%$$

$$Fe < 2\ \%$$

**Claims**

1. Welding electrode comprising a wire or strip made of a nickel-based alloy, the chemical composition of which comprises, by weight:

$$20\% \leq Cr \leq 24\%$$

$$8\% \leq Mo \leq 12\%$$

$$0.1\% \leq W \leq 5\%$$

$$Mo + W > 12\%$$

$$Fe < 5\%$$

$$Cu < 0.1\%$$

$$N < 0.1\%$$

$$C < 0.02\%$$

$$Si < 0.1\%$$

$$Mn < 0.4\%$$

$$0.03\% \leq Al \leq 0.4\%$$

$$0.004\% \leq Mg \leq 0.04\%$$

$$P < 0.02\%$$

$$S < 0.02\%,$$

the balance being nickel and impurities resulting from smelting.

2. Welding electrode according to Claim 1, **characterized in that** its chemical composition is such that:

$$21\% \leq Cr \leq 23\%$$

$$9\% \leq Mo \leq 11\%$$

$$2\% \leq W \leq 4\%$$

$$Fe < 2\%.$$

3. Electrode according to Claim 1 or Claim 2, **characterized in that** it consists of a bare wire.

4. Electrode according to Claim 1 or Claim 2, **characterized in that** it is of the non-synthetic covered wire type.

5. Method of welding sheets or plates made of superaustenitic stainless steel or superduplex stainless steel or steel containing 9% nickel for cryogenic applications, by addition of metal by melting a welding electrode, **characterized in that** the welding electrode is in accordance with any one of Claims 1 to 4.

6. Nickel-based alloy comprising, by weight:

$$20\% \leq Cr \leq 24\%$$

$$8\% \leq Mo \leq 12\%$$

$$0.1\% \leq W \leq 5\%$$

$$Mo + W > 12\%$$

$$Fe < 5\%$$

$$Cu < 0.1\%$$

$$N < 0.1\%$$

$$C < 0.02\%$$

$$Si < 0.1\%$$

$$Mn < 0.4\%$$

$$0.03\% \leq Al \leq 0.4\%$$

$$0.004\% \leq Mg \leq 0.04\%$$

$$P < 0.02\%$$

$$S < 0.02\%,$$

the balance being nickel and impurities resulting from smelting.

7. Nickel-based alloy according to Claim 6, **characterized in that** the chemical composition of the alloy is such that:

$$21\% \leq Cr \leq 23\%$$

$$9\% \leq Mo \leq 11\%$$

$$2\% \leq W \leq 4\%$$

$$Fe < 2\%.$$

**Patentansprüche**

1. Schweißelektrode, die einen Draht oder ein Band aus einer Nickelbasislegierung enthält, deren chemische Zusammensetzung in Gewichtsprozent umfasst:

$$20\,\% \leq Cr \leq 24\,\%$$

$$8\,\% \leq Mo \leq 12\,\%$$

$$0{,}1\,\% \leq W \leq 5\,\%$$

$$Mo + W > 12\,\%$$

$$Fe < 5\,\%$$

$$Cu < 0{,}1\,\%$$

$$N < 0{,}1\,\%$$

$$C < 0{,}02\,\%$$

$$Si < 0{,}1\,\%$$

$$Mn < 0{,}4\,\%$$

$$0{,}03\,\% \leq Al \leq 0{,}4\,\%$$

$$0{,}004\,\% \leq Mg \leq 0{,}04\,\%$$

$$P < 0{,}02\ \%$$

$$S < 0{,}02\ \%,$$

wobei der Rest aus Nickel und aus der Verarbeitung stammenden Verunreinigungen besteht.

2. Schweißelektrode nach Anspruch 1, **dadurch gekennzeichnet, dass** die chemische Zusammensetzung so ist, dass die folgenden Beziehungen erfüllt werden:

$$21\% \le Cr \le 23\%$$

$$9\ \% \le Mo \le 11\ \%$$

$$2\% \le W \le 4\ \%$$

$$Fe < 2\ \%.$$

3. Elektrode nach Anspruch 1 oder Anspruch 2, **dadurch gekennzeichnet, dass** sie aus einem blanken Draht besteht.

4. Elektrode nach Anspruch 1 oder Anspruch 2, **dadurch gekennzeichnet, dass** sie vom nicht synthetischen, umhüllten Typ ist.

5. Verfahren zum Schweißen von Blechen aus nichtrostendem superaustenitischem Stahl oder nichtrostendem Superduplex-Stahl oder Stahl mit 9 % Nickel für Tieftemperaturanwendungen, in dem Metall durch Schmelzen einer Schweißelektrode zugeführt wird, **dadurch gekennzeichnet, dass** die Schweißelektrode eine Elektrode nach einem der Ansprüche 1 bis 4 ist.

6. Nickelbasislegierung, die in Gewichtsprozent enthält:

$$20\ \% \le Cr \le 24\ \%$$

$$8\ \% \le Mo \le 12\ \%$$

$$0{,}1\ \% \le W \le 5\ \%$$

$$Mo + W > 12\ \%$$

$$Fe < 5\ \%$$

$$Cu < 0{,}1\ \%$$

$$N < 0{,}1\ \%$$

C < 0,02 %

Si < 0,1 %

Mn < 0,4 %

$0,03\% \leq Al \leq 0,4\%$

$0,004\% \leq Mg \leq 0,04\%$

P < 0,02 %

S < 0,02 %,

wobei der Rest aus Nickel und aus der Verarbeitung stammenden Verunreinigungen besteht.

7. Nickelbasislegierung nach Anspruch 6, **dadurch gekennzeichnet, dass** die chemische Zusammensetzung der Legierung so ist, dass gilt:

$21\% \leq Cr \leq 23\%$

$9\% \leq Mo \leq 11\%$

$2\% \leq W \leq 4\%$

Fe < 2 %.